# EUROPEAN PATENT SPECIFICATION

(11) **EP 3 219 957 B1**
(45) Date of publication and mention of the grant of the patent: **12.05.2021**
(21) Application number: 17161919.0
(22) Date of filing: 20.03.2017
(51) Int. Cl.: F02C 6/12, F02C 7/047, F02C 9/18

(54) **THERMAL MANAGEMENT SYSTEM FOR DEICING AIRCRAFT WITH TEMPERATURE BASED FLOW RESTRICTOR**
HEIZUNG ZUM ENTEISEN VON FLUGZEUGKOMPONENTEN MIT TEMPERATURBASIERTER DURCHFLUSSREGELUNG
SYSTÈME DE GESTION THERMIQUE DE DÉGIVRAGE D'AÉRONEF AVEC RESTRICTEUR DE FLUX EN FONCTION DE LA TEMPÉRATURE

(30) Priority: 18.03.2016 US 201615074450
(43) Date of publication of application: 20.09.2017
(73) Proprietor: Rohr, Inc., Chula Vista, CA 91910-2098 (US)
(72) Inventor: HEID, Paul F., Santee, CA California 92071 (US)
(74) Representative: Dehns

(56) References cited:
- EP-A1- 2 829 706
- WO-A2-01/23724
- US-A1- 2015 337 679
- US-B2- 6 688 558

## Description

### BACKGROUND OF THE INVENTION

### 1. Technical Field

This disclosure relates generally to an aircraft and, more particularly, to a thermal management system for heating and thereby de-icing a body of the aircraft.

### 2. Background Information

Some aircraft bodies, such as a nacelle inlet, may be susceptible to ice build-up during certain cold weather conditions. Such ice build-up increases the weight of the aircraft body, increases aerodynamic drag on the aircraft body, and may detrimentally alter the aerodynamic performance of the aircraft body. To reduce the likelihood of or prevent ice build-up on an aircraft body, that body or an adjacent body may be configured with a thermal management system, which may be referred to as a de-icing or anti-icing system.

Some known thermal management systems direct relatively hot compressed air, bled from a gas turbine engine compressor, to a nacelle body to thereby heat that body and prevent ice build-up on the body. However, temperature fluctuations of the bleed air can cause the nacelle body and/or components of the thermal management system to overheat during certain operating conditions. There is a need in the art therefore for an improved thermal management system that can account for temperature fluctuations of the bleed air and reduce or prevent overheating.

US 6,688,558 B2 discloses an assembly for an aircraft with a gas turbine engine as set forth in the preamble of claim 1.

### SUMMARY OF THE DISCLOSURE

According to an aspect of the present disclosure, an assembly is provided for an aircraft with a gas turbine engine as recited in claim 1.

The flow restrictor may be configured as or otherwise include a passive, thermally actuated valve.

The flow restrictor may be fluidly coupled between the pressure regulator and the inlet nose lip.

The regulator may regulate the pressure of the flow of bleed gas based on pressure of the flow of bleed gas.

The regulator may consist essentially of a single valve; e.g., only include one valve.

The regulator may include a plurality of valves.

The body may be formed from metal and/or composite material.

The foregoing features and the operation of the invention will become more apparent in light of the following description and the accompanying drawings.

### BRIEF DESCRIPTION OF THE DRAWINGS

FIG. 1 is a block diagram illustration of an aircraft propulsion system configured with a thermal management system.
FIG. 2 is a block diagram illustration of a pressure regulator, which may be configured with a controller (see dashed lines).
FIG. 3 is a block diagram illustration of another pressure regulator, which may be configured with a controller (see dashed lines).
FIG. 4 is a block diagram illustration of a passively actuated flow restrictor.
FIG. 5 is a graph depicting operation of a flow restrictor with a single static flow restriction position which is enabled when a certain temperature threshold is met.
FIG. 6 is a graph depicting operation of a variable flow restrictor with a plurality of different variable and static flow restriction positions which are respectively enabled when certain associated temperature thresholds are met.

### DETAILED DESCRIPTION OF THE INVENTION

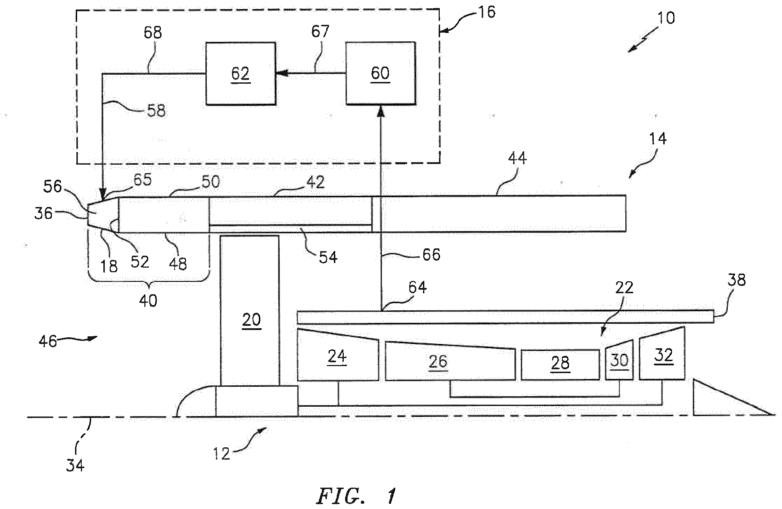

FIG. 1 illustrates a propulsion system 10 for an aircraft. This aircraft propulsion system 10 includes a gas turbine engine 12 housed within a nacelle 14. The aircraft propulsion system 10 also includes a thermal management system 16 configured to selectively direct relatively hot gas (e.g., compressed air) bled from the gas turbine engine 12 to at least a portion of the nacelle 14 such as, but not limited to, an inlet nose lip 18. This relatively hot bleed gas (e.g., bleed air) may heat the inlet nose lip 18 and thereby reduce the likelihood or substantially prevent formation of ice on the inlet nose lip 18 and/or an adjacent portion of the nacelle 14.

Briefly, the turbine engine 12 of FIG. 1 is configured as a turbofan engine. This turbofan engine may be a direct drive turbofan engine or a geared turbofan engine. The turbofan engine includes a fan 20 and an engine core 22. The engine core 22 may include low and high pressure compressors 24 and 26, a combustor 28 and high and low pressure turbines 30 and 32. The present disclosure, however, is not limited to the foregoing exemplary turbine engine 12 type or configuration. For example, in other embodiments, the turbine engine 12 may be configured as a turbojet engine.

The nacelle 14 extends along an axis 34 between a nacelle forward end 36 and a nacelle aft end 38. The nacelle 14 includes a nacelle inlet 40, a fan cowl 42 and an aft nacelle structure 44, which may be configured as or with a thrust reverser system. The nacelle inlet 40 is disposed at (e.g., adjacent) the nacelle forward end 36. The fan cowl 42 is disposed axially between the nacelle inlet 40 and the aft nacelle structure 44. The aft nacelle structure 44 is disposed at (e.g., proximate) the nacelle aft end 38.

The nacelle inlet 40 is configured to direct a stream of air through an inlet throat 46 and into the turbine engine 12. More particularly, the nacelle inlet 40 is configured to divide and provide a separation between (A) air flowing into the inlet throat 46 and (B) air flowing around and outside of the propulsion system 10.

The nacelle inlet 40 includes an (e.g., acoustic) inner barrel 48, an outer barrel 50, the inlet nose lip 18 and a bulkhead 52. The inner barrel 48 extends axially between the inlet nose lip 18 and a fan case 54. The outer barrel 50 at least partially circumscribes the inner barrel 48, and extends axially between the inlet nose lip 18 and the fan cowl 42. The inlet nose lip 18 is disposed at the nacelle forward end 36 and forms the inlet throat 46. The bulkhead 52 is configured with (e.g., arranged within or otherwise) the nacelle inlet 40, for example mounted with the inlet nose lip 18, thereby forming a cavity 56 / plenum (or cavities / plenums) within the nacelle inlet 40 for receiving the relatively hot bleed gas from the thermal management system 16. The nacelle inlet 40 may also be configured with an exhaust port (not shown) to vent cooled air out of the cavity 56. The present disclosure, however, is not limited to the foregoing exemplary nacelle 14 or nacelle inlet 40 configuration.

The thermal management system 16, which may also be referred to as a de-icing system or anti-icing system, includes a flowpath 58, a pressure regulator 60 and a flow restrictor 62. The flowpath 58 extends between and fluidly couples a bleed port supply 64 (or multiple bleed port supplies) of the engine core 22 to an inlet 65 (or inlets) to the cavity 56. The bleed port supply 64 is configured to provide the relatively hot bleed gas, which may be bled from one of the compressors 24, 26 or another section of the turbine engine 12, to the flowpath 58. The inlet 65 is configured to provide the relatively hot bleed gas flowing through the flowpath 58 to the cavity 56 within the nacelle inlet 40.

The flowpath 58 includes one or more ducts 66-68. The term "duct" may describe a single or multi-segment structure (e.g., supply line) which forms a passageway through which gas may be directed. Each duct 66-68, for example, may be configured as or include a length of tubing, conduit or pipe. Each duct 66-68 may also or alternatively be configured as or include a device with an internal bore or passageway such as a hollow guide vane, a chamber formed within the nacelle 14, etc. The present disclosure, of course, is not limited to the foregoing exemplary duct configurations.

The first duct 66 extends between and fluidly couples the bleed port supply 64 of the engine core 22 and the pressure regulator 60. The second duct 67 extends between and fluidly couples the pressure regulator 60 and the flow restrictor 62. The third duct 68 extends between and fluidly couples the flow restrictor 62 and the inlet 65 to the cavity 56.

The pressure regulator 60 may be operated to regulate the pressure of the bleed gas downstream of the pressure regulator 60 within the flowpath 58 to a constant set point pressure, e.g. 80 p.s.i. (552 MPa). The present disclosure, however, is not limited to the foregoing exemplary pressure regulator 60 control methodology. For example, in other embodiments, the pressure regulator 60 may be another type of bleed gas regulation device, which regulates the downstream air to a variable set point pressure based on parameters relating to engine operation or function.

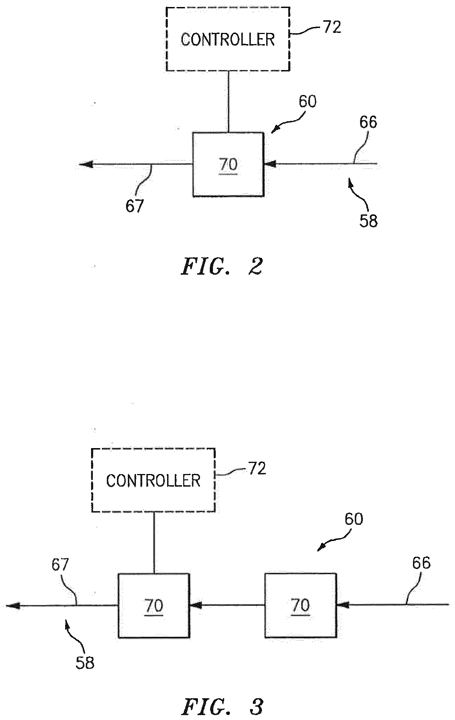

The pressure regulator 60 may be configured with a single pressure regulation device 70 (e.g., a valve) as shown in FIG. 2. Alternatively, the pressure regulator 60 may include a plurality of pressure regulation devices 70 (e.g., valves) as shown in FIG. 3 for redundancy and fail safe, with each device set to regulate to a different set point pressure. One or more of the pressure regulation devices 70 may be passively controlled; e.g., pressure actuated valves. One or more of the pressure regulation devices 70 may be actively controlled. At least one of the pressure regulation devices 70, for example, may be fully opened, partially opened or closed in response to receiving a control signal from a controller 72 for the pressure regulator 60.

Referring again to FIG. 1, the temperature of the bleed gas flowing through the flowpath 58 may fluctuate depending upon the specific operating conditions (e.g., ambient conditions) and/or state of operation of the turbine engine 12 (e.g., part or full throttle). As a result, under certain conditions, the inlet nose lip 18 may be overheated by the bleed gas, the pressure of which is being regulated by the pressure regulator 60. Such overheating may lead to degradation and premature failure of the inlet nose lip 18 and/or other components of the nacelle 14 and/or the thermal management system 16.

To accommodate temperature fluctuations and reduce the likelihood or substantially prevent overheating, the flow restrictor 62 is disposed downstream of the pressure regulator 60. This flow restrictor 62 is configured to selectively restrict the flow of the bleed gas being directed to the inlet nose lip 18 when a temperature of that bleed gas (e.g., within the flowpath 58 or within the cavity 56) is equal to or higher than a predetermined threshold temperature. The flow restrictor 62, for example, may function as a variable throttle or valve that may restrict the flow of bleed gas. The flow restrictor may operate between a fully open position where its throttle area is 100% and at a maximum, down to a restricted throttle position of 20%, or even to 0% or fully closed. Because the air fed to the flow restrictor 62 is at a constant pressure due to the upstream pressure regulator 60, by varying the throttle open area, the mass flow of air through the system can be reliably predicted along with other properties like flow speed, which helps to define and predict the heat transfer reactions in the cavity 56.

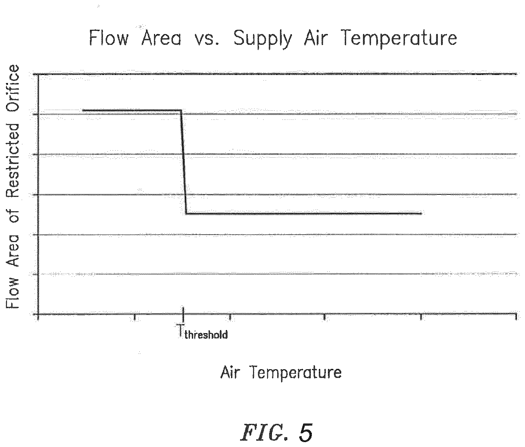

Referring to FIG. 5, the flow restrictor 62 may statically restrict the flow of bleed gas when the temperature of the bleed gas rises above an associated threshold temperature. For example, in the exemplary embodiment of FIG. 7, the flow restrictor 62 has a single restriction position (e.g., about 50% restriction) that is associated with a single threshold temperature T_{threshold}. When the temperature is less than T_{threshoid} , the flow restrictor will be open to 100% of its throttle area, and when the temperature is greater than T_{threshold} , the flow restrictor may close to 50% of its throttle area. Of course, in other embodiments, the flow restrictor 62 may have a plurality of restriction positions (e.g., about 70% restriction, about 50% restriction, etc.) that are respectively associated with a plurality of threshold temperatures. The foregoing restriction is performed passively as described below.

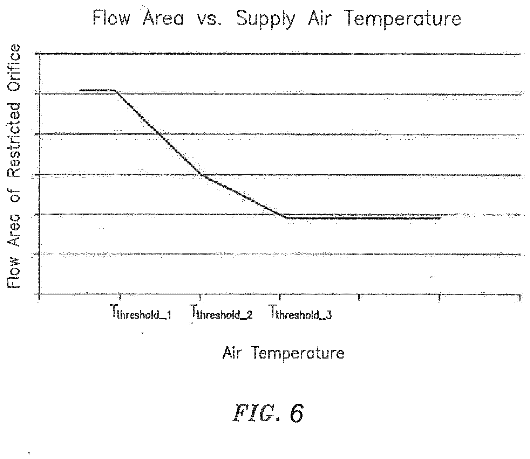

Referring now to FIG. 6, the flow restrictor 62 may alternatively variably restrict the flow of bleed gas as the temperature of the bleed gas rises above one or more associated threshold temperatures. For example, in the exemplary embodiment of FIG. 8, the flow restrictor 62 progressively restricts the flow of the bleed gas according to a first function as the temperature of the bleed gas rises above a first threshold temperature T_{threshold_1}. The flow restrictor 62 then progressively restricts the flow of the bleed gas according to a second function as the temperature of the bleed gas rises above a second threshold temperature T_{threshold_2}. The flow restrictor 62 then may statically restrict the flow of bleed gas when the temperature of the bleed gas rises above a third threshold temperature T_{threshoid_3}. Of course, in other embodiments, the flow restrictor 62 may variably restrict the flow of bleed gas after a single threshold temperature is met. The foregoing restriction is performed passively as described below.

In some embodiments, the flow restrictor 62 may be configured to always allow a certain minimum flow of the bleed gas to pass therethrough and flow to the inlet nose lip 18. However, in other embodiments, the flow restrictor 62 may be configured to substantially shut off the flow of bleed gas to the inlet nose lip 18.

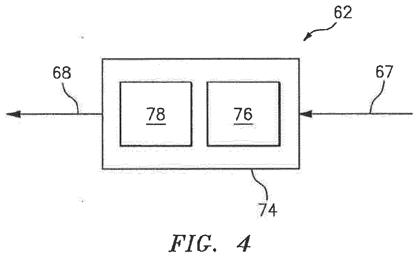

The flow restrictor 62 may be configured with a single flow restriction device 74 (e.g., a valve) as shown in FIGS. 4-6. However, in other embodiments, the flow restrictor 62 may include a plurality of flow restriction devices (e.g., valves).

Referring to FIG. 4, the flow restrictor 62 is configured as a passively actuated flow restrictor. The flow restriction device 74, for example, may be configured as a passive, thermally actuated valve. More particularly, the flow restriction device 74 may include an internal thermostat 76 which actuates a valve mechanism 78 to at least partially close when the temperature of the bleed gas flowing through the flow restrictor 62 is equal to or greater than the threshold temperature. The present disclosure, however, is not limited to the foregoing exemplary passively actuated flow restrictor 62 type or configuration.

In some embodiments, the inlet nose lip 18 may be formed from metal. The inlet nose lip 18, for example, may be constructed from sheet metal; e.g., sheet aluminum. In other embodiments, the inlet nose lip 18 may be formed from a composite material. The inlet nose lip 18, for example, may be constructed from fiber-reinforced material within a resin matrix. The present disclosure, however, is not limited to the foregoing exemplary materials.

While the thermal management system 16 is described above as directing the flow of bleed gas to the inlet nose lip 18, the thermal management system 16 may also or alternatively direct the bleed gas to one or more other metal and/or composite bodies. The thermal management system 16, for example, may direct the flow of bleed gas to an inlet guide vane. In another example, the thermal management system 16 may direct the flow of bleed gas to a leading edge portion of an aircraft wing to which the aircraft propulsion system 10 is mounted.

While the thermal management system 16 is described above as receiving the flow of bleed gas from one of the compressors 24, 26, this gas may alternatively be bled from another section of the turbine engine 12.

An aircraft propulsion system may be subject to MMEL (master minimal equipment list) operation when one or more of its components is degrading or non-operational. Under certain modes of MMEL operation, the aircraft propulsion system and/or the aircraft are operated within certain bounds which are less than that of a fully operational aircraft propulsion system and/or aircraft. For example, the aircraft propulsion system may be prevented from operating at full thrust, the maximum flight altitude for the aircraft may be lowered, the maximum or minimum ambient operating temperatures in which the aircraft propulsion system is allowed to operate may be respectively lowered or raised, etc.

Under certain conditions, the MMEL operation may be further limited in order to account for specific component failures. For example, a prior art thermal management system may only include a pressure regulator with a pair of pressure regulating valves. When one of these valves fails, the aircraft propulsion system may be operated in MMEL operation. However, because there is no failsafe if the other valve fails and/or to prevent overheating, the MMEL operation may be further restricted to prevent operation of the aircraft in high ambient temperature conditions, etc. For example, under full MMEL operation, the aircraft propulsion system may operate up to a first maximum ambient temperature. However, under restricted MMEL operation, the aircraft propulsion system may operate up to a second maximum ambient temperature which is less than the first maximum ambient temperature.

The thermal management system 16 of the present disclosure, in contrast, can accommodate such a failure and still allow for full MMEL operation. In particular, even when one of the pressure regulation devices 70 fails, the thermal management system 16 still has the flow restrictor 62 to prevent overheating. Thus, the thermal management system 16 of the present disclosure may provide for more complete MMEL operation than prior art systems.

While various embodiments of the present invention have been disclosed, it will be apparent to those of ordinary skill in the art that many more embodiments and implementations are possible within the scope of the invention.

Accordingly, the present invention is not to be restricted except in light of the attached claims

## Claims

1. An assembly for an aircraft with a gas turbine engine (12), the assembly comprising:
a nacelle (14) comprising an inlet nose lip (18); and
a thermal management system (16) including a duct (58), a pressure regulator (60) and a flow restrictor (62), the thermal management system (16) configured to direct a flow of bleed gas through the duct (58) from the gas turbine engine (12) to the inlet nose lip (18) for heating at least a portion of the inlet nose lip (18); and
the pressure regulator (60) configured to regulate a pressure of the bleed gas downstream of the pressure regulator (60); **characterised in that** the flow restrictor (62) is configured to selectively restrict the regulated flow of bleed gas through the duct (58) when a temperature of the flow of bleed gas is greater than a threshold temperature (T_{threshold}), wherein the flow restrictor (62) is a passively actuated flow restrictor (62) and is fluidly coupled between the pressure regulator (60) and the inlet nose lip (18).

2. The assembly of claim 1, wherein the flow restrictor (62) comprises a passive, thermally actuated valve (74).

3. The assembly of any preceding claim, wherein the regulator (60) regulates the pressure of the flow of bleed gas based on pressure of the flow of bleed gas.

4. The assembly of any preceding claim, wherein the regulator (60) consists essentially of a single valve (70).

5. The assembly of any of claims 1 to 3, wherein the regulator (60) comprises a plurality of valves (70).

6. The assembly of any preceding claim, wherein the inlet nose lip (18) is formed from metal.

7. The assembly of any preceding claim, wherein the inlet nose lip (18) is formed from composite material.

## Patentansprüche

1. Anordnung für ein Luftfahrzeug mit einem Gasturbinentriebwerk (12), wobei die Anordnung Folgendes umfasst:
eine Gondel (14), die eine Einlassnasen-Lippe (18) umfasst; und
ein Wärmeverwaltungssystem (16), das eine Leitung (58), einen Druckregler (60) und einen Durchflussbegrenzer (62) beinhaltet, wobei das Wärmeverwaltungssystem (16) zum Leiten eines Zapfgasstroms durch die Leitung (58) hindurch von dem Gasturbinentriebwerk (12) zur Einlassnasen-Lippe (18) zum Heizen mindestens eines Abschnitts der Einlassnasen-Lippe (18) konfiguriert ist; und
wobei der Druckregler (60) zum Regeln eines Drucks des Zapfgases stromabwärts von dem Druckregler (60) konfiguriert ist; **dadurch gekennzeichnet, dass**
der Durchflussbegrenzer (62) zum selektiven Begrenzen des regulierten Zapfgasstroms durch die Leitung (58) hindurch konfiguriert ist, wenn eine Temperatur des Zapfgasstroms höher als eine Schwellenwerttemperatur (T_{Schwellenwert}) ist, wobei der Durchflussbegrenzer (62) ein passiv betätigter Durchflussbegrenzer (62) ist und zwischen dem Druckregler (60) und der Einlassnasen-Lippe (18) fluidisch gekoppelt ist.

2. Anordnung nach Anspruch 1, wobei der Durchflussbegrenzer (62) ein passives, wärmebetätigtes Ventil (74) umfasst.

3. Anordnung nach einem der vorhergehenden Ansprüche, wobei der Regler (60) den Druck des Zapfgasstroms basierend auf dem Druck des Zapfgasstroms reguliert.

4. Anordnung nach einem der vorhergehenden Ansprüche, wobei der Regler (60) im Grunde aus einem einzigen Ventil (70) besteht.

5. Anordnung nach einem der Ansprüche 1 bis 3, wobei der Regler (60) eine Vielzahl von Ventilen (70) umfasst.

6. Anordnung nach einem der vorhergehenden Ansprüche, wobei die Einlassnasen-Lippe (18) aus Metall ausgebildet ist.

7. Anordnung nach einem der vorhergehenden Ansprüche, wobei die Einlassnasen-Lippe (18) aus Verbundmaterial ausgebildet ist.

## Revendications

1. Ensemble pour un aéronef avec un moteur à turbine à gaz (12), l'ensemble comprenant :
une nacelle (14) comprenant une lèvre avant d'entrée (18) ; et
un système de gestion thermique (16) comportant un conduit (58), un régulateur de pression (60) et un restricteur de flux (62), le système de gestion thermique (16) étant configuré pour diriger un flux de gaz de prélèvement à travers le conduit (58) depuis le moteur à turbine à gaz (12) jusqu'à la lèvre avant d'entrée (18) afin de chauffer au moins une partie de la lèvre avant d'entrée (18) ; et
le régulateur de pression (60) étant configuré pour réguler une pression du gaz de prélèvement en aval du régulateur de pression (60) ; **caractérisé en ce que**
le restricteur de flux (62) est configuré pour restreindre sélectivement le flux régulé de gaz de prélèvement à travers le conduit (58) lorsqu'une température du flux de gaz de prélèvement est supérieure à une température seuil (Tₛₑᵤᵢₗ), dans lequel le restricteur de flux (62) est un restricteur de flux (62) actionné passivement et est couplé fluidiquement entre le régulateur de pression (60) et la lèvre avant d'entrée (18).

2. Ensemble selon la revendication 1, dans lequel le restricteur de flux (62) comprend une soupape passive actionnée thermiquement (74).

3. Ensemble selon une quelconque revendication précédente, dans lequel le régulateur (60) régule la pression du flux de gaz de prélèvement en fonction de la pression du flux de gaz de prélèvement.

4. Ensemble selon une quelconque revendication précédente, dans lequel le régulateur (60) est essentiellement constitué d'une seule soupape (70).

5. Ensemble selon l'une quelconque des revendications 1 à 3, dans lequel le régulateur (60) comprend une pluralité de soupapes (70).

6. Ensemble selon une quelconque revendication précédente, dans lequel la lèvre avant d'entrée (18) est formée à partir de métal.

7. Ensemble selon une quelconque revendication précédente, dans lequel la lèvre avant d'entrée (18) est formée à partir d'un matériau composite.
